# EUROPÄISCHE PATENTANMELDUNG

(11) **EP 1 744 420 A1**
(43) Veröffentlichungstag der Anmeldung: **17.01.2007**
(21) Anmeldenummer: 06014180.1
(22) Anmeldetag: 07.07.2006
(51) Int. Cl.: H02B 1/30

(54) **Schrank, insbesondere Schalt- und/oder Verteilerschrank**

(30) Priorität: 11.07.2005 DE 102005032897
(71) Anmelder: Hager Electro GmbH, 66131 Saarbrücken (DE)
(72) Erfinder: Noll, Jürgen, 66440 Blieskastel (DE); Isberg, Martin, 66440 Blieskastel (DE); Amendola, Ettore, 66131 Saarbrücken (DE); Loew, Thomas, 66386 St. Ingbert (DE); Vannesson, Damien, 57520 Grossbliederstroff (FR); Liedinger, Michael, 66265 Heusweiler (DE)
(74) Vertreter: Bernhardt, Reinold

(57) **Zusammenfassung**

Die Erfindung betrifft einen Schrank, insbesondere Schalt-/und Verteilerschrank (1) mit wenigstens einer Öffnung (7, 8) in einer Seitenwand (2) für die Einführung eines den Schrank (1) mit einem weiteren Schrank verbindenden Elements (9).

Gemäß der Erfindung ist die Öffnung (7, 8) innerhalb einer nach außen hin offenen Einsenkung (5) in der Seitenwand (2) des Schranks (1) gebildet. Es ist eine in die Einsenkung (5) einsetzbare Abdeckung vorgesehen, welche vorzugsweise die Einsenkung ausfüllt und bündig mit der äußeren Oberfläche der Seitenwand abschließt.

## Beschreibung

Die Erfindung betrifft einen Schrank, insbesondere Schalt- und/oder Verteilerschrank, mit wenigstens einer Öffnung an einer Seitenwand für die Einführung eines den Schrank mit einem weiteren Schrank oder Gehäuse verbindenden Elements.

Bei der Installation größerer Zähler- und/oder Verteileranlagen werden Schalt- und/oder Verteilerschränke miteinander verbunden und sowohl neben als auch übereinander angeordnet. Die Seitenwände durch Benutzung bekannter solcher Schränke sind mit Öffnungen für die Einführung von Verbindungselementen, insbesondere Schraubverbindungselementen, vorgefertigt. Erfolgt keine Nutzung der Öffnungen, z. B. zur Verbindung von Schränken, so werden die freiliegenden Öffnungen abgedeckt, wobei die Abdeckungen von der Oberfläche der Schrankwand vortretende Erhebungen bilden.

Der Erfindung liegt die Aufgabe zugrunde, einen neuen Schrank der eingangs erwähnten Art zu schaffen, dessen Erscheinungsbild frei von Beeinträchtigungen durch von der Wandoberfläche vorstehende Abdeckungen ist.

Der diese Aufgabe lösende Schrank nach der Erfindung ist dadurch gekennzeichnet, dass die Öffnung innerhalb einer nach außen offenen Einsenkung der Seitenwand gebildet und eine in die Einsenkung einsetzbare Abdeckung vorgesehen ist.

Vorteilhaft braucht eine solche Abdeckung, welche die Einsenkung vorzugsweise vollständig ausfüllt, nicht über die Oberfläche der Seitenwand hinaus vorzustehen und kann bündig mit dieser Oberfläche abschließen. innerhalb der Einsenkung kann eine weitere Öffnung für die Durchführung von Leitungen gebildet sein, welche ggf. groß im Vergleich zu der Öffnung für die Einführung des Verbindungselements ist. Vorteilhaft lässt sich eine beiden Öffnungen gemeinsame Abdeckung verwenden.

Die Abdeckung kann eine Sollbruchlinie aufweisen, welche, in Projektion auf die Seitenwand, zwischen der Öffnung für die Einführung eines Verbindungselements und der Öffnung für die Durchführung von Leitungen verläuft. Wird zum Beispiel die Öffnung für die Durchführung von Leitungen nicht benötigt, so genügt es, von der Abdeckung den die Öffnung für die Einführung des Verbindungselements verschließenden Teil abzubrechen, und die Abdeckung im übrigen zu verwenden.

Das Verbindungselement kann einen zum Eingriff in die Einsenkung vorgesehenen Mittelabschnitt mit einer der zweifachen Tiefe der Einsenkung entsprechenden Dicke aufweisen.

Von dem Mittelabschnitt können in entgegengesetzten Richtungen Gewindestücke zur Einführung in die betreffenden Öffnungen miteinander zu verbindender Schränke vorstehen. Auf die Gewindestücke lassen sich Muttern aufschrauben. Das Mittelstück überbrückt den durch die Einsenkungen gebildeten Zwischenraum zwischen den Schränken. Verformungen der Blechwand durch die aufgeschraubten Muttern werden vermieden.

In weiterer Ausgestaltung der Erfindung kann die Öffnung Randausnehmungen zur Bildung eines Bajonettverschlusses für die Befestigung der Abdeckung in der Einsenkung aufweisen.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: zwei erfindungsgemäße Schränke in einer perspektivischen Ansicht,
- Fig. 2: eine Detailansicht eines der Schränke von Fig. 1,
- Fig. 3: ein zur Verbindung der Schränke von Fig. 1 verwendetes Verbindungselement,
- Fig. 4: die Schränke von Fig. 1 in Anordnung übereinander mit angesetzten seitlichen Abdeckungen,
- Fig. 5: ein zur vertikalen Verbindung der Schränke von Fig. 1 verwendetes Verbindungselement,
- Fig. 6: ein zweites Ausführungsbeispiel für einen Schrank nach der Erfindung in einer Teilansicht,
- Fig. 7: die Teilansicht von Fig. 6 mit Verbindungselementen, und
- Fig. 8: ein weiteres Ausführungsbeispiel für Verbindungselemente zum Verbinden von Schränken gemäß Fig. 6 und 7.

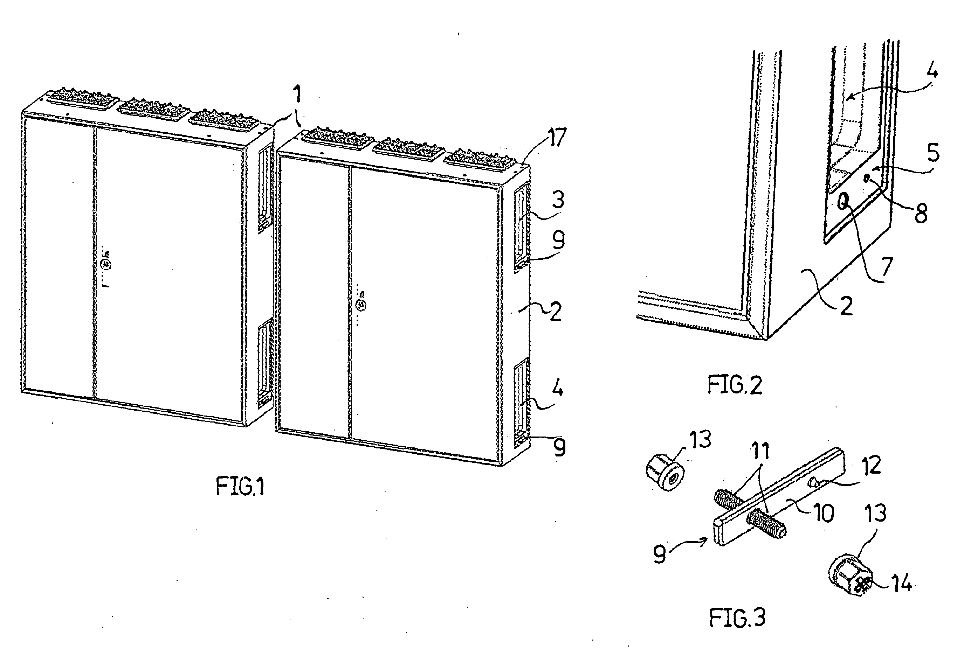

In Fig. 1 gezeigte, aus Blech hergestellte Verteilerschränke 1 weisen an ihrer rechten und linken Seitenwand 2 jeweils Öffnungen 3 und 4 für die Durchführung von Leitungen auf.

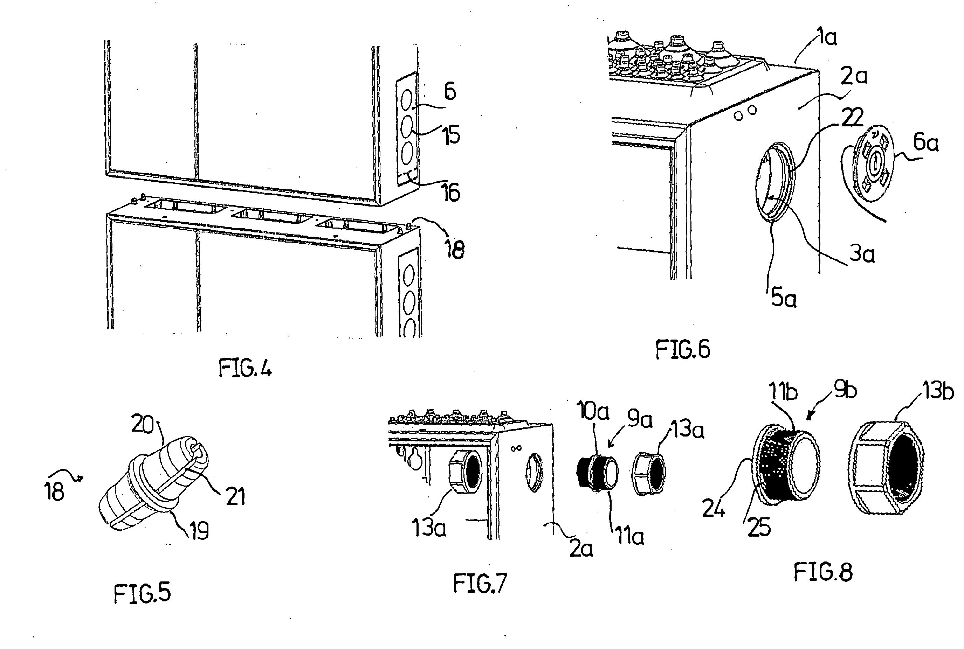

Wie aus Fig. 2 hervorgeht, sind die Öffnungen 3 und 4 jeweils innerhalb einer nach außen offenen Einsenkung 5 in der Seitenwand gebildet. Gemäß Fig. 4 kann diese Einsenkung vollständig durch eine Abdeckung 6 ausgefüllt werden, deren Dicke gleich der Tiefe der Einsenkung ist und die daher bündig mit der äußeren Oberfläche der Seitenwand 2 des Schranks abschließt.

Wie Fig. 2 ferner erkennen lässt, sind in einem unteren Abschnitt der Einsenkung 5 weitere, durch das Blech der Seitenwand 2 durchgehende Öffnungen 7 und 8 gebildet. Unter Nutzung dieser Öffnungen und mit Hilfe von Verbindungselementen gemäß Fig. 3 lassen sich die Verteilerschränke 1 an ihren Seitenwänden 2 miteinander verbinden.

Fig. 3 zeigt ein Verbindungselement 9 mit einem länglichen, streifenartigen Mittelstück 10, von dem in entgegengesetzten Richtungen Gewindebolzen 11 vorstehen. Die Dicke des Mittelstücks in Richtung der Drehachse der Gewindebolzen 11 entspricht der zweifachen Tiefe der Einsenkung 5. Von dem Mittelstück stehen im Abstand zu den Gewindebolzen 11 ferner in entgegengesetzten Richtungen Zapfen 12 vor.

Zur Verbindung zweier Schränke werden die Gewindebolzen 11 in einander gegenüberliegende Öffnungen 7 und die Zapfen 12 in einander gegenüberliegende Öffnungen 8 miteinander zu verbindender Schränke 1 eingeführt. Auf die aus der Öffnung 7 ins Schrankinnere vorstehenden Gewindebolzen 11 werden Überwurfmuttern 13 aufgeschraubt. Das Mittelstück füllt den durch die einander gegenüberliegenden Einsenkungen 5 gebildeten Zwischenraum zwischen den Schränken 1 aus und bildet ein Widerlager für die Überwurfmuttern 13, welches Verformungen des Bleches der Seitenwände 2 durch die Schraubverbindung verhindert.

Wie Fig. 3 erkennen lässt, sind die Muttern 13 nicht nur durch einen Schraubenschlüssel drehbar, sondern weisen auch Einschlitzungen 14 für den Eingriff eines Schraubendrehers auf.

Wenn zur Durchführung von Leitungen durch die Öffnungen 3 und 4 nicht deren gesamte Querschnittsfläche benötigt wird, lassen sich aus den Abdeckungen 6, welche an der Öffnung 3 bzw. 4 einrastbar sind, kleinere Öffnungen 15 ausbrechen.

In Projektion auf die Seitenwand 2 zwischen der Öffnung 3 bzw. 4 und den Öffnungen 7 und 8 verläuft in der Abdeckung 6 ferner eine Sollbruchlinie 16, welche es ermöglicht, ein Endstück derart abzubrechen, dass lediglich die Öffnungen 7 und 8 freigegeben sind. Soll keine Durchführung von Leitungen erfolgen, so kann der Rest der Abdeckung 6 in der Einsenkung 5 verbleiben.

Die in Fig. 1 gezeigten Verteilerschränke 1 weisen sowohl in ihrer oberen als auch unteren Seitenwand nahe deren kürzeren Seitenrändern Paare von Öffnungen 17 auf, in welche in Fig. 6 gezeigte Verbindungselemente 18 einsteckbar sind.

Wie aus Fig. 5 hervorgeht, weisen die Verbindungselemente 18 neben einem ringförmig vorstehenden Mittelstück 19 sich von dem Mittelstück 19 in entgegengesetzten Richtungen erstreckende, konische Zapfen 20 mit einem Längsschlitz 21 auf.

Es wird nun auf die Fig. 6 bis 8 Bezug genommen, wo gleiche oder gleichwirkende Teile mit der selben Bezugszahl wie in den vorangehenden Fig. bezeichnet sind, wobei der betreffenden Bezugszahl jeweils der Buchstabe a bzw. b beigefügt ist.

Im oberen Teil einer Seitenwand 2a eines Verteilerschranks 1 a ist innerhalb einer Einsenkung 5a eine durch das Blech der Seitenwand durchgehende Öffnung 3a gebildet. Ausnehmungen 22 am Öffnungsrand gestatten die Durchführung an einer Abdeckung 6a gebildeter Nasen 23 derart, dass sich die Abdeckung 6a in der Einsenkung 5a durch einen Bajonettverschluss befestigen lässt. Die Abdeckung 6a füllt die Einsenkung 5a aus und schließt bündig mit der äußeren Oberfläche der Seitenwand 2a ab.

Zur Verbindung zweier Schränke 1 a werden die Abdeckungen 6a von den betreffenden Seitenwänden entfernt. Ein Verbindungselement 9a greift mit von einem Mittelstück 10a in entgegengesetzten Richtungen vorstehenden Gewindeansätzen 11a in die einander gegenüberliegenden Öffnungen 3a der miteinander zu verbindenden Schränke ein. Auf die in die Schränke hinein vorstehenden Gewindeansätze 11 a werden dann Muttern 13a aufgeschraubt.

Die Dicke des ringförmig vorstehenden Mittelstücks 10a entspricht der doppelten Tiefe der Einsenkung 5a und füllt daher den durch die Einsenkung gebildeten Zwischenraum zwischen den miteinander verbundenen Schränken vollständig aus.

Im unteren Bereich der Seitenwände 2a könnte zwischen den Schränken 1 a nochmals die vorangehend beschriebene Verbindung oder eine Verbindung vorgesehen werden, wie sie anhand der Fig. 1 bis 4 beschrieben ist.

Fig. 8 zeigt ein alternatives Verbindungselement 9b, das nur einen, von einem Kopfstück 24 vorstehenden Gewindeansatz 11 b aufweist. Das Kopfstück 24 liegt gegen die Innenseite der Seitenwand eines von zwei miteinander zu verbindenden Schränken 1 a an, wobei an dem Kopfstück 24 vorgesehene Nasen 25 in die Randausnehmungen 22 der Öffnung 3a unter Sicherung des Verbindungselements 9b gegen Drehung eingreifen. Auf den in den anderen Schrank hinein vorstehenden Gewindeansatz 11b wird zur Verbindung der Schränke eine Mutter 13b aufgeschraubt.

## Patentansprüche

1. Schrank, insbesondere Schalt- und/oder Verteilerschrank (1), mit wenigstens einer Öffnung (7, 8) in einer Seitenwand (2) für die Einführung eines den Schrank (1) mit einem weiteren Schrank oder Gehäuse verbindenden Elements (9),
**dadurch gekennzeichnet,**
**dass** die Öffnung (7, 8) innerhalb einer nach außen offenen Einsenkung (5) in der Seitenwand (2) gebildet und eine in die Einsenkung (5) einsetzbare Abdeckung (6) vorgesehen ist.

2. Schrank nach Anspruch 1,
**dadurch gekennzeichnet,**
**dass** die Abdeckung (6) die Einsenkung (5) ausfüllt.

3. Schrank nach Anspruch 1 oder 2,
**dadurch gekennzeichnet,**
**dass** die Abdeckung (6) bündig mit der äußeren Oberfläche der Seitenwand (2) des Schrankes (1) abschließt.

4. Schrank nach einem der Ansprüche 1 bis 3,
**dadurch gekennzeichnet,**
**dass** innerhalb der Einsenkung (5) eine weitere Öffnung (3, 4) für die Durchführung von Leitungen gebildet ist.

5. Schrank nach Anspruch 4,
**dadurch gekennzeichnet,**
**dass** die Abdeckung (6) eine Sollbruchlinie (16) aufweist, welche, in Projektion auf die Seitenwand (2), zwischen der Öffnung (7, 8) für die Einführung des Verbindungselements (9) der Öffnung (3, 4) für die Durchführung von Leitungen verläuft.

6. Schrank nach einem der Ansprüche 1 bis 5,
**dadurch gekennzeichnet,**
**dass** das Verbindungselement (9) einen zum Eingriff in die Einsenkung (5) vorgesehenen Mittelabschnitt (10) mit einer der zweifachen Tiefe der Einsenkung (5) entsprechenden Dicke aufweist.

7. Schrank nach Anspruch 6,
**dadurch gekennzeichnet,**
**dass** von dem Mittelstück (10) in entgegengesetzten Richtungen Gewindeansätze (11) zur Einführung in die betreffenden Öffnungen (7, 8) miteinander zu verbindender Schränke (1) vorstehen.

8. Schrank nach einem der Ansprüche 1 bis 7,
**dadurch gekennzeichnet,**
**dass** die Öffnung (3a) Randausnehmungen (22) zur Bildung eines Bajonettverschlusses für die Befestigung der Abdeckung (6a) in der Einsenkung (5a) aufweist.
